# EUROPEAN PATENT SPECIFICATION

(11) **EP 1 800 843 B1**
(45) Date of publication and mention of the grant of the patent: **19.05.2010**
(21) Application number: 06126191.3
(22) Date of filing: 14.12.2006
(51) Int. Cl.: B29D 30/06, B60C 11/04

(54) **Method of forming a tire**
Verfahren zum Formen eines Luftreifens.
Procédé pour le moulage d'un pneumatique.

(30) Priority: 22.12.2005 US 315568
(43) Date of publication of application: 27.06.2007
(73) Proprietor: The Goodyear Tire & Rubber Company, Akron, OH 44316-0001 (US)
(72) Inventor: Nguyen, Gia Van, 08110 Blagny (FR); Cambron, Anne-France Gabrielle Jeanne-Marie, 4735 Petange (LU); Fourgon, Fernand Antoine Joseph, 6600 Bastogne (BE)
(74) Representative: Kutsch, Bernd

(56) References cited:
- EP-A- 1 772 293
- WO-A-02/090094
- BE-A- 399 026
- DE-C- 533 651
- GB-A- 290 462
- US-A- 2 960 138

## Description

### Field of the Invention

The present invention relates to a method of forming a pneumatic tire, and more particularly to forming a pneumatic tire wherein the tread is configured to provide a different tread pattern as the tire is worn.

### Background of the Invention

Tire tread patterns are provided with numerous elements such as ribs and blocks, the elements being separated by circumferential and/or transverse grooves. The grooves provide means for water evacuation and form the biting edges of the tread elements.

When a tire is new, the tread has a maximum tread height. This initial height may vary depending upon the intended use of the tire; a winter tire has an increased tread depth in comparison to an all season tire. Regardless of the initial tread depth, when the tire is new, the tread elements have an initial stiffness. The actual stiffness of the tread elements is dictated by the block size, shape, the presence of any siping, and the tread compound. As the tread is worn, the block height decreases while the tread element stiffness increases. As the tread stiffness increases, some desired tire characteristics, such as wet skid and wet handling, decrease. Hydroplaning characteristics also decrease with increased tread wear due to the reduced groove volume. It would be desirable, then, to better maintain a tire's performance characteristics as the tire wears.

US-B- 6,408,910 discloses a method of manufacturing a tire to maintain a desired groove volume wherein the tire is manufactured with molds that create submerged grooves that appear when the tread is worn. However, such a tire is difficult to manufacture due to the necessity of removing the molds that create the submerged grooves, and use of this method is limited to forming only submerged grooves that contact the tread edges or open into grooves.

US-A- 2,960,138 describes a method of manufacturing a tire according to the preamble of claim 1. Similar methods are known from GB-A- 290 462, WO-A- 02/090094, DE-C- 533 651 and BE-A- 399 026.

### Summary of the Invention

Disclosed herein is a method of forming a pneumatic tire according to claim 1.

Dependent claims cover preferred embodiments of the invention.

The tire is designed to have a variable tread pattern, the tread pattern changing with wear, to achieve similar tread performance for the tire when both new and worn. The changing pattern optimizes the worn tire performance in an attempt to maintain the tire's wet performance characteristics.

After wear of the tire tread to a preset level, the tube is exposed and opened during further wear to create increased grooving in the tread after the tire has experienced some tire wear.

In one aspect of the disclosed method, the tread stock is formed by extrusion and at least one groove is formed in the tread stock into which the tube is placed. The formed groove may extend along the longitudinal length of the stock, or it may be transverse to the longitudinal length of the tread stock. The formed groove may be continuous or it may be a discontinuous, short length groove or series of discontinuous short length grooves. For such a grooved extruded tread stock, the groove formed in the tread stock prior to curing is preferably not coincident with any groove formed on the radially outer surface of the cured tire.

In another aspect of the invention, the tube placed in or adjacent to the tread is formed of a material that is not destroyed during vulcanization of the tire. The tube may be a continuous ring shaped tube extending the full circumference of the tire, a preformed open-ended tube of any length or at least one flexible cylinder of any length. The tube preferably has a thickness in the range of 0.10 to 5 mm. The tube may be formed from either a vinyl copolymer or a thermoplastic material. The tube may also be provided with a fill material that is released when the tube material is worn away during tread wear.

In another aspect of the invention, the tube may have a preformed shape. Such a preformed shape may be selected from the group consisting of circular, elliptical, a two-dimensional curvilinear configuration, square, rectangular, trapezoidal, tetragonal, pentagonal, hexagonal, and polygonal.

In another aspect of the manufacturing method, during curing of the tire, the tube is held in the desired position by needles extending from a tread mold surface, mold ribs extending from the tread mold surface, or sipe blades extending from the tread mold surface.

In another aspect of the manufacturing method, an additional step of placing a cushion rubber on the belt structure prior to placing the tread stock on the radially outer surface of the belt structure may be performed.

Also disclosed a tire made by the disclosed manufacturing method and its variations.

The disclosed tire has a carcass, a belt structure, and a tread. The tread has either at least one surface circumferential groove or at least one surface lateral groove, and an evolving tread configuration wherein the tread configuration varies at different depths of the tread. The tread has a buried groove, the buried groove not communicating with any surface groove. The tread is formed of at least one rubber matrix that is all cured at the same time and in the same mold as the remainder of the tire.

### Definitions

The following definitions are controlling for the disclosed invention.

"Annular" means formed like a ring.

"Evolving tread configuration" means a tread configuration that varies at different depths, or wear levels, of the tread.

"Inner" means toward the inside of the tire and "outer" means toward its exterior.

"Lateral" means an axial direction.

"Nonskid" means the depth of grooves in a tire tread.
"Radial" and "radially" are used to mean directions radially toward or away from the axis of rotation of the tire.

### Brief Description of the Drawings

The invention will be described by way of example and with reference to the accompanying drawings in which:
FIG. 1 is a tire formed in accordance with the invention;
FIG. 2 is an unworn tire tread;
FIG. 3 is the tread of FIG. 2, following a defined amount of wear;
FIG. 4 is a cross sectional view of a tread stock;
FIGS. 5A - 5B are cross sectional view of tread stocks; and
FIGS. 6 - 9 are alternative views of tread stocks.

### Detailed Description of the Invention

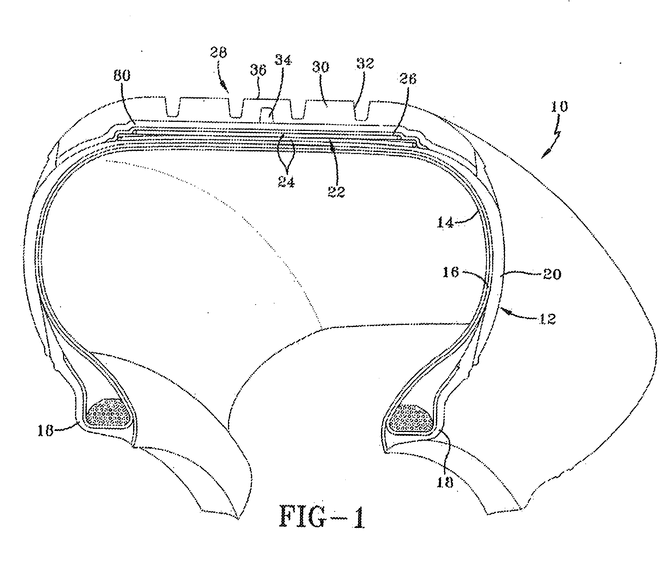

FIG. 1 is a cross-sectional view of a pneumatic tire 10 that has been formed in accordance with the invention. The tire 10 has a carcass structure 12 comprising an innerliner 14, at least one reinforcing ply 16 extending between a pair of opposing bead portions 18 and a pair of opposing sidewalls 20. Radially outward of the carcass 12 is a belt package 22. The belt package 22 conventionally has at least two plies 24 of preferably crossed reinforcing cords. Radially outward of the crossed cord plies 24, and part of the belt package 22, there may optionally be an overlay ply 26 of cords inclined substantially parallel to the circumferential direction of the tire 10.

A tire tread 28, located on the radially outer surface of the tire 10, is characteristically defined by a plurality of tread elements 30 in the form of blocks and/or ribs. Such tread elements 30 are formed by circumferentially extending and/or laterally extending grooves 32. Located inward of the tread surface is at least one buried groove 34. The buried groove 34 preferably has at least some portion extending in the circumferential direction. Additionally, preferably the buried groove 34, when the tread is at an unworn stage, does not communicate with any surface grooves 32 in the tread, i.e. it is isolated within a tread element 30 of the tire tread 28; a surface groove being defined as a groove that is present at the tread surface 36 when the tire 10 is at an unworn stage.

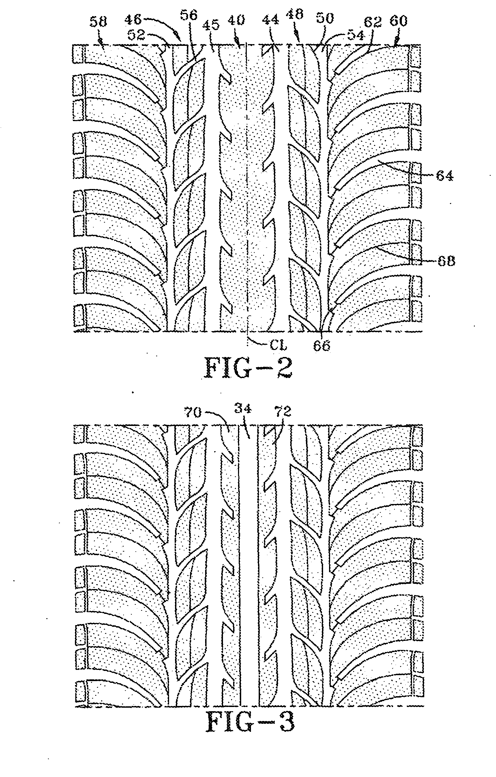

In the tread of FIG. 2, at the unworn stage, the tread is defined by four circumferentially extending grooves, dividing the tread into five rows of tread elements. The tread element row 40 located on the tread centerline CL is a rib defined by circumferential grooves 42, 44. The tread element rows 46, 48 bordering the center tread element row 40 are a plurality of blocks 50 formed by the circumferential rows 42, 44, 52, 54 and lateral grooves 56.

Axially outward of the outer circumferential rows 52, 54 are the axially outermost tread element rows 58, 60. These rows 58, 60 have a plurality of quasi blocks 62. The blocks 62 are formed by the circumferential grooves 52, 54 and inclined lateral grooves 64; however, the blocks 62 are connected at the axially inner edges by a connecting element 66. The blocks 50, 62 and the connecting element 66 are also provided with sipes 68 to increase the number of biting edges in the tread.

The tread of FIG. 3 is the tread of FIG. 2 after approximately 30 percent wear. The worn tread has an additional circumferential groove 34 that now divides the center tread element row 40 into two smaller width rows 70, 72. The presence of the exposed groove 34 after a period of wear increases the wet performance characteristics of the tire. The tread has an evolving tread configuration wherein the tread configuration varies at different depths, or wear levels, of the tread. The tread with such a later exposed groove may be formed as described below.

In a two-stage tire building process, the tire carcass 12 is assembled on a first stage tire building drum. The green carcass 12 comprises all of the elements of the tire excluding the belt package 22 and the tread 4. The belt-tread package is formed separately on a second stage tire building machine. Plies 24, 26 of belt package material are positioned on the second stage drum, then a continuous strip of green rubber that will form the tread 4 is supplied as tread stock material. The continuous strip is cut to the necessary length, preferably at an angle, for splicing cut end to cut end to form a closed circle covering the belt package. The assembled belt-tread package is applied to the green tire carcass already assembled on the first stage tire building machine. The tire carcass is then "blown up" into a torodial shape within the belt-tread package and sent to a mold where the entire assembly is cured into the final tire. Examples of this process are disclosed in US-B- 5,141,587, US-B-5,3544,404, US-B- 5,554,242, and US-B- 6,139,668.

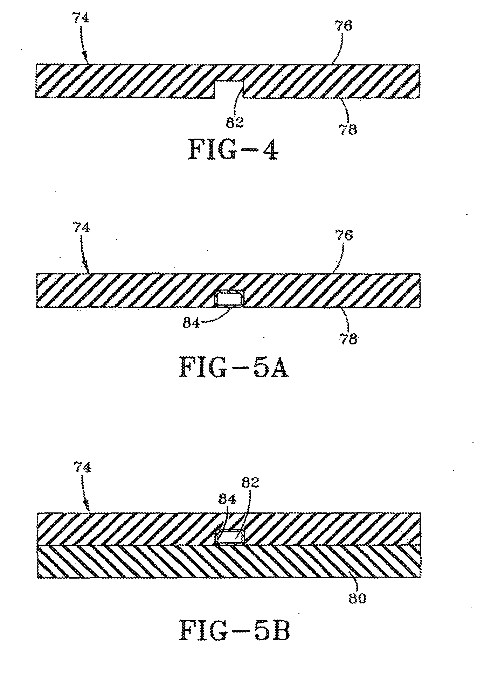

FIG. 4 illustrates a cross-sectional view of a tread stock 74 for the tread configuration of FIGS. 2 and 3 useful for the present invention. The tread stock 74 has a predominately rectangular configuration, though the ends may be tapered more than illustrated. The tread stock 74 has a defined outer side 76 and a defined inner side 78. The outer side 76 will be placed external to the belt package 22 and the tire carcass 12 on the green tire, and form the tread configuration of the cured tire. The inner side 78 is the side of the tread stock 74 that will be placed directly onto the belt package 22 or a tread base stock material 80. In accordance with an embodiment of the invention, to form a wear-exposed groove 34 in a evolving tread configuration, at least one groove 82 is preformed in one side 76, 78 of the tread stock 74. In the tread stock 74 of FIG. 4, the groove 82 is formed on the stock inner side 78.

The groove 82 in the tread stock 74 may be formed by extrusion or by removal of stock material to form the groove 82. In forming the groove 82, the groove 82 may be formed with a cross-sectional area greater than desired for the final cured buried groove 34. Forming the groove 82 with a greater cross-sectional area by having either a greater width or a greater depth will compensate if there is limited flow of the tread stock 74 during curing resulting in a smaller cross-sectional area final cured buried groove 34. Alternatively, the groove 82 may be formed to approximately the same dimensions as the cured buried groove 34.

Alternatively, if the tread compound 74 is subject to high flow during curing of the tire, either due to the tread compound or the selected tread configuration, the groove 82 may be maintained by insertion of an element 84 into the groove 82 that is not destroyed during curing or which maintains its integrity during cure completion, see FIGS 5A and 5B.

As noted above, the groove 82 may be formed on the inner side 78 or the outer side 76 of the tread stock material 74. When the groove 82 is formed on the inner side 78, as illustrated, and the groove shape is maintained by the use of an insertion element 84 such as a tube, during molding of the tire, the tread stock material flows around the insertion element 84, and the relative location of the insertion element 84 is not affected during molding. If the rubber flow during curing has the potential to move the insertion element 84 from the final desired location within the cured tire, mold means may be used to retain the insertion element 84 in the desired location. Such mold means includes needles extending from the tread mold, or groove ribs or sipe blades extending from the mold. If using needles, the needles are dimensional to provide the necessary retention of the insertion element 84, but small enough to not alter the final tread configuration. If needles alone are used to retain the insertion element 84, preferably, a set of needles is employed, one on each side of the insertion element 84, with sets of needles located along the length of the insertion element 84 as needed. Such retention means will position the insertion means 84 from the top and/or sides, while the expansion of the tire during curing will hold the insertion means 84 from the underside.

If the groove 82 and an insertion element 84 is located on the outer side 76 of the tread stock 74 to form the buried groove 34, the tread rubber must flow around the insertion element 84 to complete encompass the insertion element 82. For such an embodiment, in the final cured tire, the buried groove 34 will be relatively close to the tread surface 36, such that the buried groove 34 becomes evident at an earlier state of tread wear, such as at 20 or 25% tread wear.

The insertion element 84 is preferably a tube having any length - equal, less than, or greater than the circumferential length of the tire tread 28. The tube may be formed as a continuous ring or have a defined length. The cross sectional configuration of the tube may vary and is likely dictated by the desired cross-sectional configuration of the buried groove. Possible cross-sectional configurations for the tube include, but are not limited to: circular, elliptical, or other two-dimensional curvilinear configuration; square, rectangular, trapezoidal, or other tetragonal shape; pentagonal, hexagonal, or other polygonal shape. The tube may be placed in the groove 82 following extrusion of the tread stock 74 or the tread stock 74 may be extruded over the tube resulting in the tread stock 74 as illustrated in FIG. 5A. Alternatively, the tube may be placed between a pair of extruded layers 74, 80 of material, see FIG. 5B; the inner tread stock 80 may be of cushion rubber that assists in holding the tube in place during molding of the tire 10. For such a dual tread stock configuration, the cushion rubber 80 may be placed first on the belt package 22 during tire building, followed by placement of the tube and the outer tread stock 74.

In one embodiment of the invention, the tube is formed from a material that is not destroyed during curing of the green tire, nor does the material interfere with the cured tire performance. The thickness of the tube material is selected to balance the above two goals and is based upon the type of material employed. Possible alternatives include, but are not limited to, a vinyl copolymer such as stiff copolymer of a starch and ethylene/vinyl alcohol or a thermoplastic material such as high molecular weight polyethylene.

Alternatively, the tube may be formed from a fully or partially precured elastomeric tube. Ideally, the rubber polymer matrix forming the tube will be the same rubber polymer matrix as the adjacent tread component but having a greater parts per hundred rubber of reinforcement material (e.g. carbon black, silica) to yield a tube with a greater stiffness than the adjacent rubber. For example, the tube is formed of material wherein the reinforcement material loading is in the range of 80 to 130 parts per hundred rubber, preferably, in the range of 100 to 120 phr.

The thickness of the tube, regardless of any precuring, is in the range of 0.10 to 5.0 mm. Preferably, the thickness of the tube is in the range of 0.50 to 3 mm. The greater tube thickness is more suited to formation of very large treads such as those used for radial medium trucks or off-road tires. For passenger vehicles, the tube thickness is in the range of 0.5 to 2 mm.

In any of the above variations, the item 84 inserted into the groove 82 to maintain the configuration may be short length closed cylinders wherein the cylinders have a length less than the circumferential length of the tire tread. This alternative embodiment is most useful when forming the discontinuous grooves on the tread stock underside.

In another embodiment, it may be desired to fill in the buried grooves 34 with a bio-degradable material or non-polluting material with a soluble link (e.g. sand bound together with a soluble glue). Examples of bio-degradable materials are disclosed in US-A- 60/723,756, filed on October 5, 2005, titled "Pneumatic Tire." The fill material may be used when the tube is partially cured, and the bio-degradable material is partially employed to maintain a shape to the tube or cylinders and to prevent the tube material from flowing into and closing the buried groove 34 during curing of the tire 10. The fill material also has the added benefit of providing stiffness to the tread when the tread rubber immediately above the filled tube has been worn low but has yet to be completely worn off the tread.

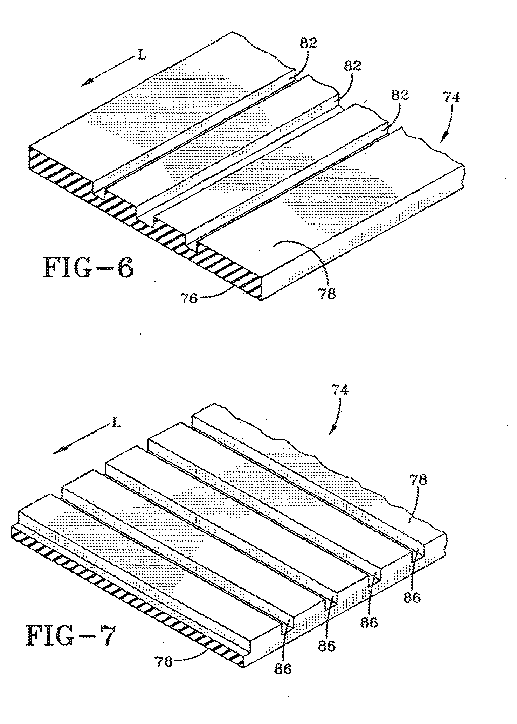

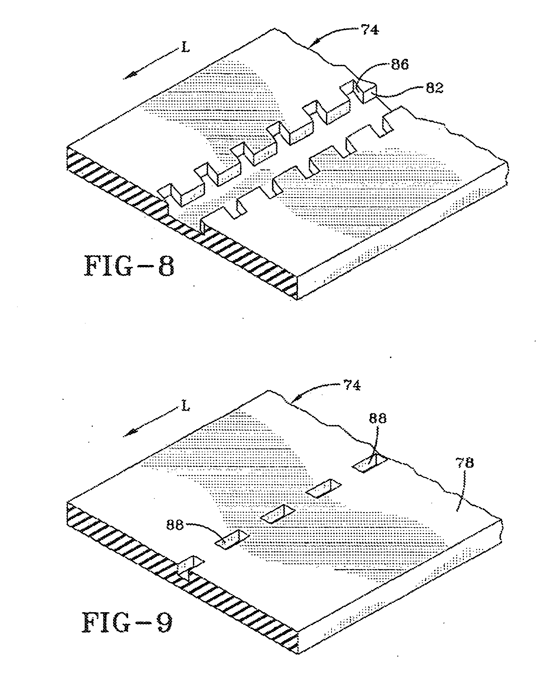

The grooves 82 formed on the tread stock may be continuous as suggested in the tread embodiment of FIG. 3; however, the grooves 82 may take any configuration desired, see FIGS 6-8. Multiple grooves 82 may be formed in the longitudinal direction L of the tread stock 74, FIG. 6; grooves 86 may be formed transverse to the longitudinal direction L of the tread stock 74, FIG. 7; or the grooves may be a combination of both longitudinal 82 and transverse 86 grooves, FIG. 8. The grooves may also be a discontinuous series 88 formed on the inner side 78 of the tread stock 74, see FIG. 9.

In another method of manufacturing the tire, the tread stock 74 provided to the second stage tire being machine is not provided with any grooves 82, 86, 88 preformed therein. After the assembled belt-tread package is assembled onto the green tire carcass, a tube in the form of a ring is applied to the outer surface 76 of the green assembly. Due to the diameter of the tube ring, its position is maintained on the green tire. During molding of the tire, similar to a groove and insertion element located on the inner side 78 of the tread stock 74, the rubber will flow around the tube ring, creating a buried groove 34 in the cured tire. This method of manufacturing does not require any change to the elements of a conventional green tire. All of the features regarding the tube as discussed above are also relevant and useful with the tube ring used in this method of manufacturing.

## Claims

1. A method of manufacturing a tire (10), the tire having a carcass (12), a belt structure (22), and a tread (28), the tread (28) having an evolving tread configuration wherein the tread configuration is varied at different depths of the tread, the method comprising:
a) forming a carcass (12), the carcass comprising at least one carcass reinforcing ply (16), a pair of opposing sidewalls (20), and a pair of opposing bead portions (18),
b) placing a belt structure (22) on the radially outer surface of the carcass (12),
c) forming a tread stock (74), the tread stock having two opposing surfaces (76, 78), namely an inner surface (78) and an outer surface (76), parallel to the length of the tread stock (74), wherein the outer surface (76) forms the outer surface of the tread (28);
d) placing the inner surface (78) of the tread stock (74) on the radially outer side of the belt structure (22) or a tread base stock, and
e) curing the tire in a mold wherein the mold has at least one rib to form a groove (42, 44) on the radially outer surface (76) of the tread (28);
**characterized in that** a groove (82) in the inner surface (78) of the tread stock (74) is formed prior to curing the tire and prior to placing the inner surface (78) of the tread stock (74) on the radially outer side of the belt structure (22) or the tread base stock, said groove (82) creating a buried groove (34) in the cured tire.

2. The method of claim 1 wherein the groove (82) is formed by extrusion or wherein the groove (82) is formed by removal of stock material from the inner surface of the tread stock (74).

3. The method of claim 1 wherein the groove (82) is formed with a cross-sectional area greater than the cured buried groove (34).

4. The method of claim 1 further comprising maintaining the shape of the groove (82) by insertion of an insertion element (84) that is not destroyed during curing or that maintains its integrity during cure completion.

5. The method of claim 4 wherein the insertion element (84) is a tube.

6. The method of claim 1 wherein the inner surface (78) of the tread stock (74) is placed directly onto the belt structure (22).

7. The method of claim 5 wherein the tube is a ring shaped tube, a preformed open ended tube or at least one flexible cylinder, or wherein the tube has a cross-sectional configuration selected from the group consisting of circular, elliptical, a two-dimensional curvilinear configuration, square, rectangular, trapezoidal, tetragonal, pentagonal, hexagonal, and polygonal.

8. The method of claim 5 or 7 wherein the tube is formed from either a vinyl copolymer or a thermoplastic material.

9. The method of claim 1 wherein in the cured tire, the groove (84) formed in the inner surface (78) of the tread stock (74) is not coincident with a groove formed on the radially outer surface (76) of the tread (28).

10. The method of claim 5, 7 or 8 wherein, during curing of the tire (10), the tube is held in a desired position by needles extending from a tread mold surface, mold ribs extending from the tread mold surface, or sipe blades extending from the tread mold surface.

11. The method of claim 1 comprising the additional step of placing a cushion rubber on the belt structure (22) prior to placing the tread stock (74) on the radially outer surface of the belt structure (22).

12. The method of claim 1 wherein the tire (10) is manufacture in a two-stage tire building process in which the carcass (12) is assembled on a first stage tire building drum and wherein the belt structure (22) and the tread (28) is formed as a belt-tread package separately on a second stage tire building machine.

13. The method of claim 5 wherein the tube is formed from a fully or partially procured elastomeric tube.

14. The method of claim 5 wherein the tube is formed by a rubber polymer matrix which is the same rubber polymer matrix as the adjacent tread stock (74) but having greater parts per hundred parts of rubber of reinforcement material to yield a tube with greater stiffness that the adjacent tread stock (74).

15. The method of claim 1 further comprising filling the groove (82) with a biodegradable or non-polluting material so that the buried groove (34) is filled with this material.

## Patentansprüche

1. Verfahren zur Herstellung eines Reifens (10), wobei der Reifen eine Karkasse (12), eine Gürtelstruktur (22) und eine Lauffläche (28) aufweist, wobei die Lauffläche (28) eine sich entwickelnde Laufflächenkonfiguration besitzt, wobei die Laufflächenkonfiguration an verschiedenen Tiefen der Lauffläche variiert wird, wobei das Verfahren umfasst:
a) Formen einer Karkasse (12), wobei die Karkasse mindestens eine Karkassenverstärkungslage (16), ein Paar gegenüberliegender Seitenwände (20) und ein Paar gegenüberliegender Wulstbereiche (18) umfasst,
b) Plazieren einer Gürtelstruktur (22) auf der radial äußeren Fläche der Karkasse (12),
c) Bilden eines Laufflächenmaterials (74), wobei das Laufflächenmaterial zwei entgegengesetzte Oberflächen (76, 78) aufweist, nämlich eine Innenfläche (78) und eine Außenfläche (76), parallel zur Länge des Laufflächenmaterials (74), wobei die Außenfläche (76) die Außenfläche der Lauffläche (28) bildet;
d) Plazieren der Innenfläche (78) des Laufflächenmaterials (74) auf der radial äußeren Seite der Gürtelstruktur (22) oder eines Laufflächenunterteilmaterials, und
e) Vulkanisieren des Reifens in einem Formwerkzeug, wobei das Formwerkzeug mindestens eine Rippe zur Bildung einer Rille (42, 44) an der radial äußeren Fläche (76) der Lauffläche (28) aufweist;
**dadurch gekennzeichnet, dass** eine Rille (82) in der Innenfläche (78) des Laufflächenmaterials (74) vor dem Vulkanisieren des Reifens und vor dem Plazieren der Innenfläche (78) des Laufflächenmaterials (74) auf der radial äußeren Seite der Gürtelstruktur (22) oder des Laufflächenunterteilmaterials gebildet wird, wobei die Rille (42) eine versenkte Rille (34) in dem vulkanisierten Reifen erzeugt.

2. Verfahren nach Anspruch 1, wobei die Rille (82) durch Extrusion gebildet wird oder wobei die Rille (82) durch Entfernen von Materialmasse von der Innenfläche des Laufflächenmaterials (74) gebildet wird.

3. Verfahren nach Anspruch 1, wobei die Rille (82) mit einer Querschnittsfläche gebildet wird, die größer als die der vulkanisierten versenkten Rille (34) ist.

4. Verfahren nach Anspruch 1, weiter das Aufrechterhalten der Form der Rille (82) umfassend, durch Einsetzen eines Einsatzelements (84), das während der Vulkanisation nicht zerstört wird oder das während der Vulkanisationsvollendung seine Unversehrtheit behält.

5. Verfahren nach Anspruch 4, wobei das Einsatzelement (84) ein Rohr ist.

6. Verfahren nach Anspruch 1, wobei die Innenfläche (78) des Laufflächenmaterials (74) direkt auf die Gürtelstruktur (22) plaziert wird.

7. Verfahren nach Anspruch 5, wobei das Rohr ein ringförmiges Rohr, ein vorgeformtes offenendiges Rohr oder mindestens ein flexibler Zylinder ist, oder wobei das Rohr eine Querschnittskonfiguration hat, ausgewählt aus der Gruppe, bestehend aus kreisförmig, elliptisch, einer zweidimensionalen krummlinigen Konfiguration, quadratisch, rechteckig, trapezförmig, viereckig, fünfeckig, sechseckig und vieleckig.

8. Verfahren nach Anspruch 5 oder 7, wobei das Rohr entweder aus einem Vinyl-Copolymer oder einem thermoplastischen Material ausgebildet ist.

9. Verfahren nach Anspruch 1, wobei in dem vulkanisierten Reifen die in der Innenfläche (78) des Laufflächenmaterials (74) gebildete Rille (84) nicht mit einer an der radial äußeren Fläche (76) der Lauffläche (28) gebildeten Rille zusammenfällt.

10. Verfahren nach Anspruch 5, 7 oder 8, wobei während des Vulkanisierens des Reifens (10) das Rohr von Nadeln, die sich von einer Profilformwerkzeugfläche erstrecken, Formwerkzeugrippen, die sich von der Profilformwerkzeugfläche erstrecken, oder Lamellenklingen, die sich von der Profilformwerkzeugfläche erstrecken, in einer gewünschten Position gehalten wird.

11. Verfahren nach Anspruch 1, umfassend den zusätzlichen Schritt des Plazierens einer Unterplattenmischung auf der Gürtelstruktur (22) vor dem Plazieren des Laufflächenmaterials (74) auf der radial äußeren Fläche der Gürtelstruktur.

12. Verfahren nach Anspruch 1, wobei der Reifen (10) in einem zweistufigen Reifenbauverfahren hergestellt wird, worin die Karkasse (12) auf einer Reifenbautrommel der ersten Stufe zusammengebaut wird, und wobei die Gürtelstruktur (22) und die Lauffläche (28) separat als ein Gürtel-Laufflächen-Paket auf einer Reifenbaumaschine der zweiten Stufe ausgebildet wird.

13. Verfahren nach Anspruch 5, wobei das Rohr aus einem vollständig oder teilweise vorvulkanisierten Elastomerrohr geformt wird.

14. Verfahren nach Anspruch 5, wobei das Rohr durch eine Kautschuk-Polymermasse gebildet wird, welche die gleiche Kautschuk-Polymermasse ist wie das benachbarte Laufflächenmaterial (74), jedoch höhere Anteile pro hundert Anteile Kautschuk- oder Verstärkungsmaterial aufweist, um ein Rohr mit einer größeren Steifigkeit als das benachbarte Laufflächenmaterial (74) zu ergeben.

15. Verfahren nach Anspruch 1, das weiter das Füllen der Rille (82) mit einem biologisch abbaubaren oder umweltfreundlichen Material, sodass die versenkte Rille (34) mit diesem Material gefüllt ist, umfasst.

## Revendications

1. Procédé de confection d'un bandage pneumatique (10), le bandage pneumatique possédant une carcasse (12), une structure de ceintures (22) et une bande de roulement (28), la bande de roulement possédant une configuration de bande de roulement évolutive dans laquelle la configuration de la bande de roulement varie à différentes profondeurs de la bande de roulement, le procédé comprenant le fait de :
a) former une carcasse (12), la carcasse comprenant au moins une nappe de renforcement de carcasse (16), une paire de flancs opposés (20) et une paire de portions de talons opposées (18) ;
b) placer une sculpture de ceintures (22) sur la surface externe de la carcasse (12) en direction radiale ;
c) former une base de bande de roulement (74), la base de bande de roulement possédant deux surfaces opposées (76, 78), plus précisément une surface interne (78) et une surface externe (76), parallèles à la longueur de la base de bande de roulement (74), la surface externe (76) formant la surface externe de la bande de roulement (28) ;
d) placer la surface interne (78) de la base de bande de roulement (74) sur le côté externe en direction radiale de la structure de ceintures (22) ou de la matière de base de la bande de roulement ; et
e) vulcaniser le bandage pneumatique dans un moule, le moule possédant au moins une nervure pour former une rainure (42, 44) sur la surface externe en direction radiale (76) de la bande de roulement (28) ;
**caractérisé en ce qu'**on forme une rainure (82) dans la surface interne (78) de la base de bande de roulement (74) avant de vulcaniser le bandage pneumatique et avant de placer la surface interne (78) sur le côté externe en direction radiale de la structure de ceintures (22) ou de la matière de base de la bande de roulement, ladite rainure (82) créant une rainure noyée (34) dans le bandage pneumatique vulcanisé.

2. Procédé selon la revendication 1, dans lequel la rainure (82) est réalisée par extrusion ou dans lequel la rainure (82) est réalisée en retirant une matière de base de la surface interne de la base de bande de roulement (74).

3. Procédé selon la revendication 1, dans lequel la rainure (82) est réalisée avec une aire de section supérieure à celle de la rainure noyée vulcanisée (34).

4. Procédé selon la revendication 1, comprenant en outre le fait de maintenir la configuration de la rainure (82) par insertion d'un élément d'insertion (84) qui n'est pas détruit lors de la vulcanisation ou bien qui conserve son intégrité au cours d'un cycle complet de vulcanisation.

5. Procédé selon la revendication 4, dans lequel l'élément d'insertion (84) est un tube.

6. Procédé selon la revendication 1, dans lequel la surface interne (78) de la base de bande de roulement (74) est placée directement sur la structure de ceintures (22).

7. Procédé selon la revendication 5, dans lequel le tube est un tube de configuration annulaire, un tube préformé à extrémité ouverte ou au moins un cylindre flexible, ou dans lequel le tube possède une configuration en coupe transversale choisie parmi le groupe constitué par une configuration circulaire, une configuration, une configuration curviligne en deux dimensions, une configuration carrée, rectangulaire, trapézoïdale, tétragonale, pentagonale, hexagonale ou polygonale.

8. Procédé selon la revendication 5 ou 7, dans lequel le tube est réalisé à partir, soit d'un copolymère de vinyle, soit d'une matière thermoplastique.

9. Procédé selon la revendication 1, dans lequel, dans le bandage pneumatique vulcanisé, la rainure (84) formée dans la surface interne (78) de la base de bande de roulement (74) ne coïncide pas avec une rainure formée sur la surface externe en direction radiale (76) de la bande de roulement (28).

10. Procédé selon la revendication 5, 7 ou 8, dans lequel, lors de la vulcanisation du bandage pneumatique (10), le tube est maintenu dans une position désirée par des aiguilles s'étendant depuis une surface de moulage de bandage pneumatique, des nervures du moule s'étendant à partir de la surface de moulage de la bande de roulement ou bien des lamelles s'étendant à partir de la surface de moulage de la bande de roulement.

11. Procédé selon la revendication 1, comprenant l'étape supplémentaire consistant à placer un rembourrage en caoutchouc sur la structure de ceintures (22) avant de placer la base de bande de roulement (74) sur la surface externe en direction radiale de la structure de ceintures (22).

12. Procédé selon la revendication 1, dans lequel le bandage pneumatique (10) est confectionné dans un processus de confection de bandage pneumatique en deux étapes, dans lequel la carcasse (12) est assemblée sur un tambour de confection de bandage pneumatique du premier stade et dans lequel la structure de ceintures (22) et la bande de roulement (28) sont réalisées sous la forme d'un conditionnement ceinture-bande de roulement, de manière séparée sur une machine de confection de bandage pneumatique du deuxième stade.

13. Procédé selon la revendication 5, dans lequel le tube est formé à partir d'un tube élastomère complètement ou partiellement prévulcanisé.

14. Procédé selon la revendication 5, dans lequel le tube est formé via une matrice polymère en caoutchouc qui représente la même matrice polymère en caoutchouc que celle de la base de bande de roulement adjacente (74), mais qui possède un plus grand nombre de parties par 100 parties de caoutchouc à titre de matière de renforcement pour obtenir un tube possédant une rigidité supérieure à celle de la base de bande de roulement adjacente (74).

15. Procédé selon la revendication 1, comprenant en outre le remplissage de la rainure (82) avec une matière biodégradable ou non polluante, de telle sorte que la rainure noyée (34) est remplie avec cette matière.
